# EUROPEAN PATENT SPECIFICATION

(11) **EP 1 913 034 B1**
(45) Date of publication and mention of the grant of the patent: **02.11.2011**
(21) Application number: 06777985.0
(22) Date of filing: 26.07.2006
(51) Int. Cl.: C08F 4/70, C08F 4/02, C08F 10/00

(54) **ACTIVATING FLUORINATED SUPPORTS WITH IRON-BASED NON-METALLOCENE COMPLEXES**
AKTIVIERUNG VON FLUORIERTEN TRÄGERN MIT NICHT-METALLOCEN-KOMPLEXEN AUF EISENBASIS
SUPPORTS ACTIVATEURS FLUORÉS COMPRENANT DES COMPLEXES NON-MÉTALLOCÈNES À BASE DE FER

(30) Priority: 03.08.2005 EP 05291668
(43) Date of publication of application: 23.04.2008
(73) Proprietor: TOTAL PETROCHEMICALS RESEARCH FELUY, 7181 Seneffe (Feluy) (BE); CENTRE NATIONAL DE LA RECHERCHE SCIENTIFIQUE (CNRS), 75016 Paris (FR)
(72) Inventor: PRADES, Floran, B-1400 Nivelles (BE); SPITZ, Roger, F-69006 Lyon (FR); BOISSON, Christophe, F-69100 Villeurba (FR); SIROL, Sabine, B-1440 Wauthier-Braine (BE); RAZAVI, Abbas, B-7000 Mons (BE)
(86) International application number: PCT/EP2006/064676
(87) International publication number: WO 2007/014890

(56) References cited:
- EP-A- 0 906 920
- WO-A-01/41920
- US-A1- 2004 102 312

## Description

This invention relates to the field of olefin polymerisation with non-metallocene complexes supported on activating support. These catalysts have a longer catalyst life - such as 30 minutes and more, than the one containing expensive organoaluminum oxy-compound or organoboron compound.

It is known in the art that mono-1-olefins, such as ethylene and propylene, can be polymerised with catalyst system employing transition metals such as titanium, vanadium, chromium, nickel and/or other metals, either unsupported or on a support such as alumina, silica, titania, and other refractory metals. Supported polymerization catalyst systems frequently are used with a cocatalyst, such as alkyl boron compounds and/or alkyl aluminum compounds and/or alkyl aluminoxy compounds. Organometallic catalyst systems or Ziegler-Natta-type catalyst systems, usually are unsupported and frequently are used with a cocatalyst, such as methylaluminoxane. Other components may be used in addition to the catalyst and cocatalyst.

It is also well known that, while no polymer production process is easy, slurry, or loop, polymerization processes are more commercially desirable than other polymerization processes, due to ease of operation. Furthermore, the type of polymerization process used can have an effect on the resultant polymer. For example, high reactor temperatures can result in low catalyst activity and productivity, as well as a low molecular weight polymer product. High reactor pressures also can decrease the amount of desirable branching in the resultant polymer.

Most polymer products made using slurry processes, especially polymer products made using supported chromium catalyst systems, have a broad molecular weight distribution and, therefore, the polymer product is very easy to process into a final product. Polymers made by other processes, such as, for example, high temperature and/or high pressure solution processes, can produce polymers having a narrow molecular weight distribution; these polymers can be very difficult to process into an article of manufacture.

Many homogeneous organometallic catalyst systems have low activity, high consumption of very costly cocatalysts like methylaluminoxane (MAO), and can produce low molecular weight polymers with a narrow molecular weight distribution. Furthermore, even though MAO can be helpful or even necessary to produce a polymer with desired characteristics, an excess of MAO can result in decreased catalyst system activity. Additionally, these types of homogeneous catalyst systems preferably are used only in solution or gas phase polymerisation processes.

US-A-5,852,145 discloses polymerisation processes for olefins using catalyst systems containing a nickel or palladium alpha-diimine complex, a metal containing hydrocarbylation compound, and a selected Lewis acid. The metal containing hydrocarbylation compound was defined as a compound that could transfer a hydrocarbyl group to a nickel or palladium compound. The patent disclosed that useful alkylating agents (defined as a form of metal containing hydrocarbylation compound) could be represented by formulas MX₂Rₙ⁶ or [Al(O)R¹¹]_{q}, that included alkylaluminium and alkylzinc compounds with or without halogen groups, as well as alkyl aluminoxanes. In that patent, the selected Lewis acids were referred to as compound (II) and it was additionally specified that when the hydrocarbylation compound was not an alkylaluminium compound containing one or more halogen atoms bound to an aluminium atom or an alkyl aluminoxane, compound (II) was compulsory.

US-A-6583235 discloses the use of aluminophosphate in catalyst systems comprising nickel and palladium catalysts and metal alkyl cocatalysts.

DE-A-19959251 discloses active catalyst systems based on group 8, 9, 10 metal complexes.

Diimine nickel dihalide complexes suitable for the homo- or copolymerisation of ethylene are disclosed in EP-A-884331.

US-A-4,716,208 also discloses a broad variety of late transition metal complexes that are suitable for the polymerisation of olefins and more particularly, Ittel et al. (Ittel S.D., Johnson L.K. and Brookhart M.; in Chem. Rev., 100, 1169, 2000.) disclose late-metal catalysts that can be used in the homo- and copolymerisation of ethylene.

All these catalyst components suffer from the disadvantage that they must be used with activating agents, more preferably with aluminoxane in order to become suitable for polymerising olefins.

EP 1238989 discloses polymerisation catalysts and a process for producing an olefin catalyst, which contains neither an organoaluminium oxy-compound nor an organoboron compounds. These catalysts have higher polymerisation activity without the expensive organo-aluminium oxy-compound or organoboron compound and which has a higher activity for a long catalyst life. The olefin polymerisation catalyst comprise:
(A) a transition metal compound or lanthanoid compound containing two or more atoms selected from the group consisting of boron, nitrogen, oxygen, phosphorus, sulphur and selenium - named in this patent non-metallocene complexes
(B) a Lewis Acid with could be ionic-bounding compounds having a layered crystal structure of a CdCl2 type such as MgCl2 - aluminium is excluded from the list of metal, a clay - clays minerals, or ion-exchange layered compounds, or an heteropoly compounds, or halogenated lanthanoid compounds.
(C) an oxygen-containing compound or nitrogen-containing compound
(D) an inactivating compound which is capable of reacting with the oxygen-containing compound or nitrogen containing compound to make the oxygen-containing compound or nitrogen-containing compound (C) inactive to the compound (A).

It is known to use activating supports with metallocene catalyst components such as disclosed for example in FR-2769245, with or without expensive organoaluminum oxy-compound.

There is thus a need to prepare active catalyst systems based on transition metal complexes that require no aluminoxane and are simple to prepare.

It is an aim of the present invention to prepare active catalyst system produced with either non-metallocene complexes as described above, or non-metallocene (I) to (III) described in patent EP 1 238 989, wherein the activation step is provided by an activating support, which contains a fluorinated aluminium Lewis Acid in combination with an alkylating agent for the non-metallocene compound.

It is another aim of the present invention to prepare polyolefin having a good morphology.

It is a further aim of the present invention to provide catalyst systems having a high life time activity compatible with a conventional industrial process, typically of 30 minutes or more.

Accordingly, the present invention discloses a catalyst system comprising:
a) a non-metallocene coordinating complex containing two or more atoms selected from the group consisting of boron, nitrogen, oxygen, phosphorus, sulphur and selenium, preferably nitrogen or oxygen ;
b) an activating support that contains a fluorinated aluminium Lewis Acid;
c) an organo-metallic compound having at least one metal-carbon bond able to generate a metal carbon bound on the non metallocene complex.

In a preferred embodiment according to the present invention the metal-based component can be represented by formula I : 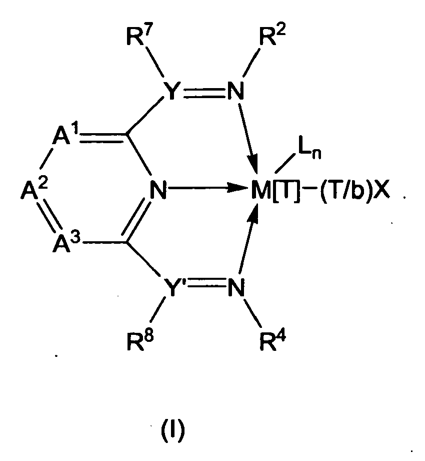 wherein L is a heteroatom-containing ligand; n is an integer of 1, 2, or 3;
wherein X represents an atom or group covalently or ionically bound to the transition metal M;
wherein R² and R⁴ are each independently selected from hydrogen, halogen, substituted or unsubstituted hydrocarbyl, substituted or unsubstituted heterohydrocarbyl or SiR'₃ wherein R' is independently selected from hydrogen, halogen, substituted or unsubstituted hydrocarbyl, substituted or unsubstituted heterohydrocarbyl and any adjacent R's may be joined together to form a ring; wherein M is Fe;
wherein T is the oxidation state of the transition metal and b is the valence of the atom or group X;
wherein Y and Y' are each independently selected from C or P(R³);
wherein A¹, A² and A³ are each independently N, P or CR⁹ with the proviso that at least one is CR⁹;
wherein R³, R⁷, R⁸ and R⁹ are each independently selected from hydrogen, halogen, substituted or unsubstituted hydrocarbyl, substituted or unsubstituted heterohydrocarbyl or SiR'₃ wherein R' is independently selected from hydrogen,
halogen, substituted or unsubstituted hydrocarbyl, substituted or unsubstituted heterohydrocarbyl.

Preferably, Y or Y' is C. Preferably A¹ to A³ are each independently CR⁹, or A¹ and A³ are both N and A2 is CR⁹, or one of A¹ or A³ is N and the other two are independently CR⁹ and more preferably, CR⁹ is CH.

Preferably, R² and R⁴ are independently selected from substituted or unsubstituted alicyclic, heterocyclic or aromatic groups such as for example phenyl, 1-naphtyl, 2-naphtyl, 2-methylphenyl, 2-ethylphenyl, 2,6-diisopropylphenyl, 2,3-diisopropylphenyl, 2,4-diisopropylphenyl, 2,6-di-n-butylphenyl, 2,6-dimethylphenyl, 2,6-dimethylphenyl, 2,6-dimethylphenyl, 2-di-t-butylphenyl, 2,6-diphenylphenyl, 2,4,6-trimethylphenyl, 2,6-trifluoromethylphenyl, 4-bromo-2,6-dimethylphenyl, 3,5-dichloro-2,6-diethylphenyl, 2,6-bis(2,6-dimethylphenyl)phenyl, cyclohexyl, pyrolyl, 2,5-dimethylpyrolyl and pyridinyl.

In another embodiment according to the present invention, the non-metallocene complex can be represent by formula IIa, IIb or IIc 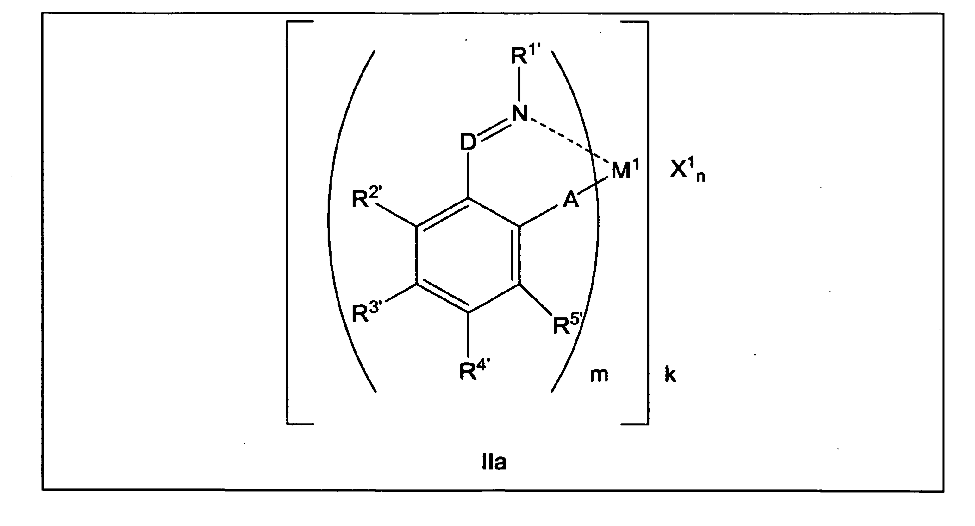 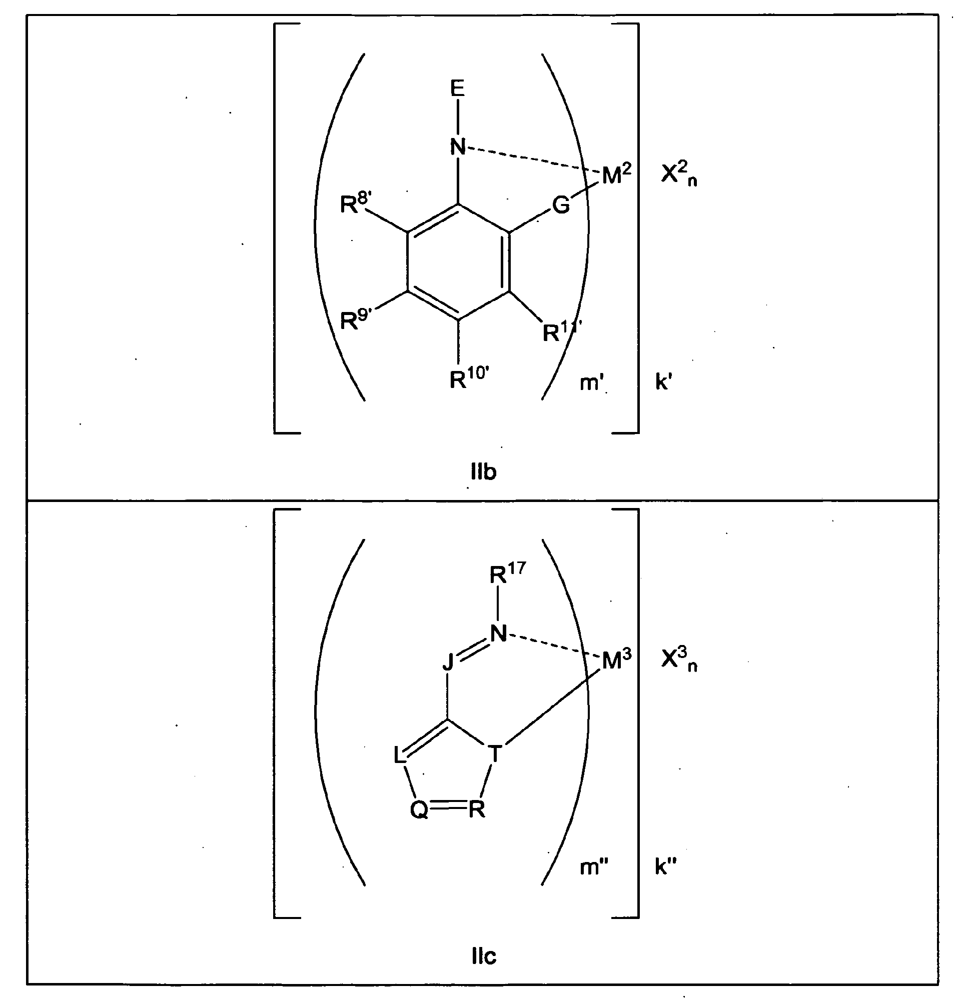 wherein all symbols are described in EP-A-1238989 from page 4, line 32 to page 9, line 17, with the restriction that M is Fe.

The non-metallocene coordinating complex or a combination of metallocene and/or non-metallocene coordinating complexes is/are deposited on and reacted with an activating support, wherein said activating support is prepared by the steps of:
a) providing a support prepared from one or more porous mineral oxides;
b) optionally heating the support under inert gas;
c) functionalising the support with a solution containing an alkylating agent;
d) fluorinating the support with a solution containing a fluorinating agent;
e) retrieving an active fluorinated support.

Optionally the functionalisation and the fluorination can be carried out in one step, by providing an appropriate solution containing a functionalising and fluorinating agent.

The present invention is characterised by the fact that the functionalised and fluorinated support does not need to be heated and oxydised in order to activate the iron complex. This is not the case when metals other than iron must be activated.

The porous mineral oxide is advantageously chosen from silica, alumina and mixtures thereof. Preferably it is silica.

The porous mineral oxide particles preferably have at least one of the following characteristics:
- they include pores having a diameter ranging from 7.5 to 30 nm;
- they have a porosity ranging from 1 to 4 cm³ /g;
- they have a specific surface area ranging from 100 to 1000 m²/g; and
- they have an average diameter ranging from 1 to 100 µm.

Before it is functionalised, the support has -OH radicals on its surface, in particular from 0.25 to 10, and even more preferably from 0.5 to 4 -OH radicals, per nm² resulting either from a thermal treatment under inert gas at a temperature of from 100 to 1000 °C, preferably at a temperature of from 120 to 800 °C and more preferably at a temperature of from 140 to 700 °C, during at least 60 minutes or from a chemical treatment. After it has been functionalised, said support has as many at least partially fluorinated aluminium and/or magnesium Lewis-acid sites per nm².

The support may be of various kinds. Depending on its nature, its state of hydration and its ability to retain water, it may undergo dehydration treatments of greater or lesser intensity depending on the desired surface content of -OH radicals.

Those skilled in the art may determine, by routine tests, the dehydration treatment that should be applied to the support that they have chosen, depending on the desired surface content of -OH radicals.

More preferably, the starting support is made of silica. Typically, the silica may be heated between 100 and 1000 ° C, preferably between 120 and 800 ° C, more preferably between 140 and 700 °C under an inert gas atmosphere, such as for example under nitrogen or argon, at atmospheric pressure or under a vacuum of about 10⁻⁵ bars, for at least 60 minutes. For such heat treatment, the silica may be mixed, for example, with NH₄Cl so as to accelerate the dehydration.

Alternatively, the heat treatment can be carried out at a temperature of from 100 to 450 ° C, in combination with a silanisation treatment. This results in a species derived from silicon being grafted on the surface of the support thereby making said surface more hydrophobic.

The silane may, for example, be an alkoxytrialkylsilane, such as for example methoxytrimethylsilane, or a trialkylchlorosilane, such as for example trimethylchlorosilalne or triethylchlorosilane. It is typically applied to the support by forming a suspension of this support in an organic silane solution, said silane solution having a concentration of between 0.1 and 10 mol per mole of OH radicals on the support. The solvent for this solution may be chosen from linear or branched aliphatic hydrocarbons, such as hexane or heptane, alicyclic hydrocarbons, optionally substituted, such as cyclohexane, and aromatic hydrocarbons, such as toluene, benzene or xylene. The treatment of the support by the silane solution is generally carried out under stirring at a temperature of from 50 to 150 ° C, during 1 to 48 hours.

After silanisation, the solvent is removed, for example, by siphoning or filtration, and the support is then being washed thoroughly, using for example 0.3 I of solvent per gram of support.

The surface -OH radical content of the support may be assayed using known techniques such as, for example, by reacting an organomagnesium compound such as CH₃ Mgl with the support and by measuring the amount of methane given off as described in McDaniel (McDaniel M.P., in J. Catal., 67, 71,1981) or by reacting triethylaluminium with the support and by measuring the amount of ethane given off as described by Gachard-Pasquet (Thesis of Veronique Gachard-Pasquet, Universite Claude Bernard, Lyon 1, France, pages 221-224, 1985).

In a first embodiment according to the present invention, functionalisation and fluorination are carried out as two separate steps. The activating supports are then formed by the reaction of -OH radicals carried by the support base particles with at least one functionalisation agent. Any functionalisation agent or mixture thereof described in FR -2,769,245 from page 5, line 9 to page 6, line 11 can be used in the present invention.

In a preferred embodiment of the present invention, the functionalisation step is carried out by treating a suspension of the support particles in a solvent medium containing the functionalisation agent at a temperature ranging from -150 to +150 ° C for a period of time ranging from 1 minute to 12 hours, and then by recovering the grafted particles after washing. The solvent is preferably selected from aliphatic, alicyclic and aromatic hydrocarbons. Preferably, the treatment is carried out at a temperature of from 30 to 100 °C and for a period of time of from 1 to 3 hours. Preferably the concentration of functionalisation agent is of from 0.5 to 20 mmol per g of support particles.

The functionalised support is then treated with a fluorinating agent that partially replaces the radicals of the functionalising agent with fluor. The functionalised support particles may then be brought into contact with gaseous hydrofluoric acid in order to carry out the fluorination treatment. This contacting step is carried out for a period of time ranging from 1 minute to 24 hours, at a temperature of from 20 to 800 °C. Alternatively, hydrofluoric acid may advantageously be replaced by powdered (NH₄)₂SiF₆; the fluorination treatment with (NH₄)₂ SiF₆ is carried out by gently fluidising the mixture of support particles and (NH₄)₂ SiF₆ under an inert gas, such as argon or nitrogen, and by submitting to a heat treatment at a temperature of from 300 to 500 ° C for a period of time of from 1 to 10 hours. An amount of fluorine of from 1 to 10% by weight, based on the total weight of the support is used for the fluorination treatment. The preferred minimum amount of fluorine is 3 wt%. The preferred maximum amount is 7 wt%, more preferably 6 wt%, most preferably 5 wt%.

In a second embodiment according to the present invention, the fluorinating step is suppressed and the support is treated with a compound comprising at least one aluminium, one fluor and one organic group, optionally in combination with any one or more compounds selected from M"F, M"R^{p}, M'F₂, M'R^{p}F, or M'R^{p}₂ wherein M" is a group 1 metal, M' is a group 2 metal and R^{p} is an alkyl having from 1 to 20 carbon atoms. The organic group is preferably an hydrocarbyl and more preferably an alkyl having from 1 to 12 carbon atoms. Preferably, the functionalisation and fluorinating agent is of formula III

Al (R')₂F (III)

wherein the R' groups, can be the same or different and are alkyl groups having from 1 to 20 carbon atoms. Preferably, R is methyl, ethyl, butyl and hexyl, and more preferably the R¹ groups are the same. The most preferred compound of formula (III) is diethylaluminiumfluoride. Fluorinated alkylaluminium can be obtained as described in H. Roesky review, *Journal* of *Fluorinated Chemistry,* **2003**, 122, 125.

The functionalisation agent can be used alone or in combination with any one or more groups selected from M"F, M"R^{p}, M'F₂, M'R^{p} F or M' R^{p}₂ wherein M" is a group 1 metal, preferably Na, M' is a group 2 metal, preferably Mg and R^{p} is an alkyl having from 1 to 20 carbon atoms.

The non-metallocene coordinating complex as described in any one of formula I or formulae IIa, IIb or IIc, or a combination thereof, is impregnated on and reacted with the activating support.

The nature, the size and the position of the substituents determine the structure of the polymer: they are thus selected according to the desired properties and structure of the resulting polymer. The polymer obtained may be isotactic or syndiotactic depending upon the nature and position of the substituents.

In the present invention, an alkylation step must be carried out with an organo-metallic compound that is able to alkylate the complex without activating it. The alkylating agent is an organometallic compound or a mixture thereof that is able to transform a metal-L group bond into a metal-carbon bond or a metal-hydrogen bond. It can be selected from an alkylated derivative of Al, Li or Mg or Zn. Preferably, it is selected from an alkylated derivative of aluminium of formula (IV)

AlR^{m}ₙX'₃₋ₙ (IV)

wherein the R^{m} groups, may be the same or different, and are a substituted or unsubstituted alkyl, containing from 1 to 12 carbon atoms such as for example ethyl, isobutyl, n-hexyl and n-octyl, X' is a halogen or hydrogen and n is an integer from 1 to 3, with the restriction that at least one R^{m} group is an alkyl. It can also be any organometallic compound able to create a metal-carbon bond provided it does not interfere with the activity of the final catalytic system.

Preferably, the alkylating agent is an aluminium alkyl, and more preferably it is triisobutylaluminium (TIBAL) or triethylaluminium (TEAL).

An alternatively, the alkylating agent is diethyl zinc.

The activating functionalised support, the alkylating agent and the non-metallocene complex are added, in any order, to prepare an active catalyst system.

In one embodiment according to the present invention, the alkylating agent is first added to the activating functionalised support. The non-metallocene complex is then dissolved in an aromatic solvent and added to the treated support.
In another embodiment according to the present invention, the alkylating agent is mixed with the non-metallocene complex and the mixture is added to the activating support.

The amount of alkylating agent is variable and the ratio Al/M is of from 1 to 10000. The amount of activating support is of from 0.01 to 2000 mg of support per micromole of iron-based non-metallocene complex.

The monomers that can be used in the present invention are alpha-olefins or ethylene, preferably ethylene and propylene.

The polymerisation conditions are not particularly limited and depend upon the monomer and the late transition metal complex. The polymerisation temperature is typically of from 0 to 120 °C and the pressure defined as the monomer pressure can be from atmospheric up to 100 bars, preferably between 3 and 50 bars.

Hydrogen may be added to the system in order to control the chain length.

When compared to homogeneous polymerisation, the catalyst system of the present invention has the great advantage of leaving the reactor clean.

Another advantage of the present invention is a higher catalyst life time than the one containing expensive organoaluminum oxy-compound or organoboron compound.

### Examples.

All the experiments were carried out under argon and with the classical Schlenk techniques. Heptane and toluene solvents were dried on a 0.3 nm molecular sieve. The number average molecular weight Mn, the weight average molecular weight Mw, the polydispersity index Mw/Mn were all determined by Steric Exclusion Chromatography (SEC) with trichlorobenzene (TCB) solvent at 135 °C, with polystyrene scaling and with Mark-Houwinck coefficients for polyethylene of K=5.25.10⁻⁴ and α=0.76.

The melting temperatures were measured by Differential Scanning Calorimetry (DSC) method and the density was measured following the method of standard test ASTM 1505 at a temperature of 23°C.

The polymer morphologies were determined either by granulometric analysis if sufficient amount of polymer was produced or with an electronic microscope otherwise.

### Example 1

### Synthesis of Support S1

The starting silica was a type 332 Grace Davidson® silica having the following characteristics:
- mean particle size = 70 µm
- mean specific area = 300 m²/g
- porous volume = 1.65 mUg
- apparent density = 0.35 g/cm³

### Step A.

5 g of the silica were heated under dynamic vacuum (10⁻² mbars) according to the following temperature scheme:
- from 30 °C to 100 °C in one hour;
- from 100 °C to 130 °C in 30 minutes;
- from 130 °C to 450 °C in one hour;
- maintained at 450 °C for four hours.

The resulting silica had an amount of surface silanol of 1.3 mmol/g.

### Step B.

In a 250 cm³ tricol equipped with a mechanical stirrer, 2.32 g of the heated silica were suspended in 100 mL of anhydrous heptane. That suspension was treated with 15 mL of a 0.6 M solution in toluene of diiethylaluminium fluoride (DEAF), or 3 equivalents with respect to silanol, during a period of time of one hour, at room temperature (about 25 °C). 100 ML of toluene were then added and the solution was maintained under stirring for a period of time of 10 minutes. The suspension was then decanted to retrieve the supernatant. The product was washed three times with 30 mL of heptane. The impregnated support was then dried under vacuum (10⁻² mbars) during a period of time of one hour.

Elemental analysis of the treated support by atomic emission spectroscopy (Inductively Coupled Plasma) gave 4.56 % Al and 2.21 % F.

### Example 2

### Synthesis of complex 2,6-bis[1-2,6-bis(isopropyl)phenyl)imido)ethyl]pyridine Fe(II) dichloride C1

Ligand 2,6-bis[1-2,6-bis(isopropyl)phenyl)imido)ethyl]pyridine was prepared following the method disclosed in Gibson (Gibson V. C., in J. Am. Chem. Soc., 121, 8728, 1999).
Elemental analysis of (C₃₃H₄₃N₃) gave the following results:
- predicted: %C= 82.32; % H= 8.94; % N=8.73.
- measured: %C= 82.11; %H=8.91; %N=8.69.
¹H NMR (CDCl₃): δ 8.52 (d, 2H, ³J(HH)=7.8 Hz, Py-Hₘ,), 7.94 (t, 1H, Py-Hₚ), 7.1 (m, 6H, Ar-H), 2.78 (sept, 4H, ³J(HH)=5.6 Hz, CHMe₂), 2.28 (s, 6H, N=CMe), 1.18 (d, 24H, CHMe₂).

Blue complex of 2,6-bis[1-2,6-bis(isopropyl)phenyl)imido)ethyl]pyridine Fe(II) dichloride, prepared from the ligand here-above was obtained following the method described in Gibson also.
Elemental analysis of (C₃₃H₄₃N₃FeCl₂) gave the following results:
- predicted: %C= 64.19; %H= 7.18 ; %N=6.8%.
- measured: %C= 64.19 ; %H=6.9; %N=6.7.

### Example 3 (reference example)

### Activation of complex C1 with MAO.

In a 1 L balloon, conditioned under argon, to 300 mL of heptane, 1.17 mL of MAO solution (Albemarle, 10 wt% in toluene) were added. 5 mL of a suspension of complex C1, (1.046 M in toluene), corresponding to 15 µmol/L and a Al/Fe ratio of 333, were syringed in the balloon.

The yellow medium was kept under manual stirring during a period of time of 5 minutes at room temperature (about 25 °C) and then syringed into a 500 mL Büchi type reactor.

The polymerisation was carried out at a temperature of 50 °C under a pressure of ethylene of 3 bars and during a period of time of 25 minutes.

The polymer was filtered, washed with methanol and dried under vacuum. 24.29 g of polymer were obtained corresponding to an activity of 1.1 10⁷ g/mol_{Fe}/h and it had the following characteristics:
- Mw = 250000
- D = 27.1
- Tm = 137,3 °C
- crystallinity = 46%
- no morphology.

### Example 4

### Activation of complex C1 with Support S1 and TiBAl

In a 50 mL ballon conditioned under argon, 0.52 mL of TIBAl (1 M solution in heptane) was added to a 2 mL suspension of blue complex C1 ([Fe] = 2,669 mM solution in toluene); the solution immediately turned yellow.

In a 50 mL balloon, conditioned under argon, 194 mg of support S1 were weighted and 1,57 mL of the yellow solution of complex C1/ TIBAl was added. The support turned yellow and the remaining solution was colourless.

In a 1 L balloon conditioned under argon, to 333 mL of heptane, the overall suspension of S1 support impregnated with the complex C1/TIBAl solution was added. The supernatant was colourless and remained colourless during polymerisation.

The medium was kept under manual stirring during a period of time of 5 minutes at room temperature (about 25 °C) and then syringed into a 500 mL Büchi type reactor.

The polymerisation was carried out at a temperature of 50 °C under a pressure of ethylene of 3 bars and during a period of time of 60 minutes.

The polymer was filtered, washed with methanol and dried under vacuum. 1.02 g of polymer were obtained corresponding to a productivity of 5 g/gₛᵤₚₚₒᵣₜ and it had the following characteristics:
- Mw = 837000
- D = 18,7
- Tm = 137,2 °C
- crystallinity = 46%
- morphology.

In conclusion, in all the examples according to the present invention, the catalyst system had a higher catalyst life time than the one containing expensive organoaluminum oxy-compound or organoboron compound described in example 3 and the polymers produced had an excellent morphology. The life time of the present systems is larger than 30 minutes.

## Claims

1. A method for preparing an active supported catalyst system that comprises the steps of:
a) preparing an activating support;
b) reacting an iron-based non-metallocene coordinating complex with the activating support;
c) adding an organo-metallic compound having at least one metal-carbon bond;
wherein the activating support is prepared by the steps of:
- providing a support prepared from one or more porous mineral oxides;
- optionally heating the support under inert gas;
- functionalising the support with a solution containing an alkylating agent;
- fluorinating the support with a solution containing a fluorinating agent;
- retrieving an active fluorinated support;
and wherein the iron-based non-metallocene coordinating complex is of formula I 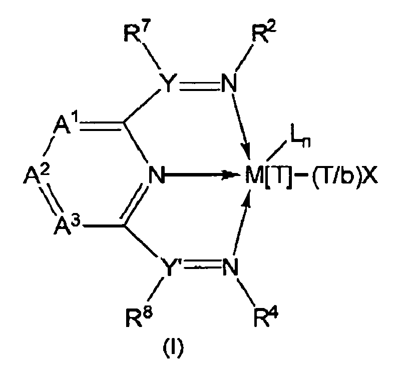 wherein X represents an atom or group covalently or ionically bound to iron; wherein L is a heteroatom-containing ligand;
wherein n is an integer from 1 to 3;
wherein T is the oxidation state of the transition metal and b is the valence of the atom or group X;
wherein R² and R⁴ are each independently selected from hydrogen, halogen, substituted or unsubstituted hydrocarbyl, substituted or unsubstituted heterohydrocarbyl or SiR'₃ wherein R' is independently selected from hydrogen, halogen, substituted or unsubstituted hydrocarbyl, substituted or unsubstituted heterohydrocarbyl and any adjacent R's may be joined together to form a ring; wherein Y and Y' are each independently selected from C or P(R³);
wherein A¹, A² and A³ are each independently N, P or CR⁹ with the proviso that at least one is CR⁹;
wherein R³, R⁷, R⁸ and R⁹ are each independently selected from hydrogen, halogen, substituted or unsubstituted hydrocarbyl, substituted or unsubstituted heterohydrocarbyl or SiR'₃ wherein R' is independently selected from hydrogen, halogen, substituted or unsubstituted hydrocarbyl, substituted or unsubstituted heterohydrocarbyl,
or a complex of formula IIa, IIb or IIc 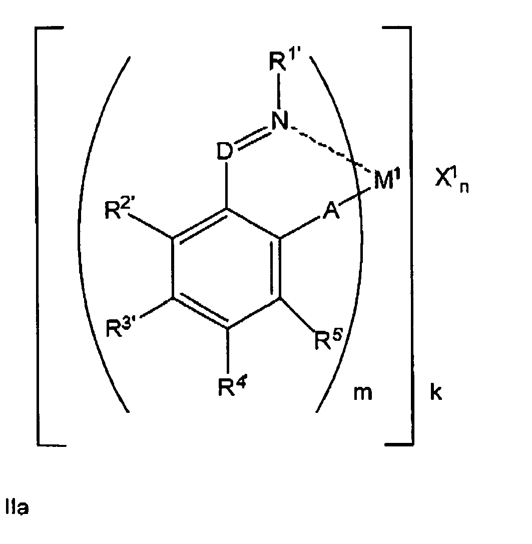 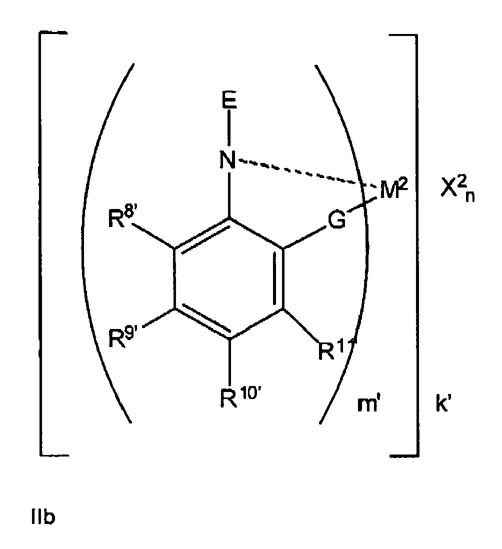 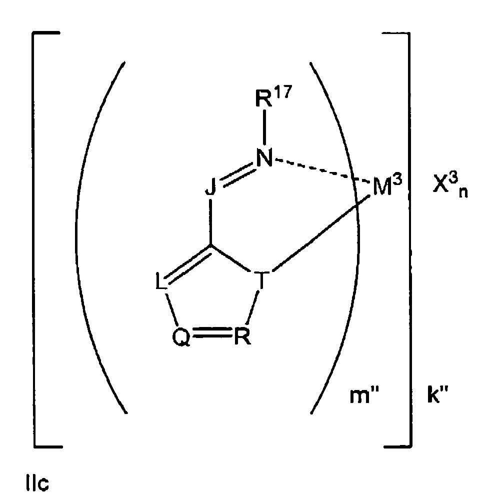 wherein all symbols are as described in EP-A-1238989 from page 4, line 32 to page 9, line 17, with the restriction that M is iron,
said active supported catalyst system being **characterised in that** it does not require any aluminoxane as activating agent.

2. The method of claim 1 wherein Y and/or Y' is C.

3. The method of claim 1 or claim 2 wherein R² and R⁴ are each independently selected from substituted or unsubstituted alicyclic, heterocyclic or aromatic groups.

4. The method of claim 1 wherein the functionalisation and fluorination steps are carried out in one step with an agent containing at least one aluminium, one fluor and an organic group.

5. The method of claim 4 wherein the functionalisation agent is Al(R)₂F, wherein the R' groups can be the same or different and are alkyl groups having from 1 to 20 carbon atoms.

6. The method of any one of claims 1 to 5 wherein organo-metallic compound is aluminium alkyl.

7. An active iron-based catalyst system obtainable by the method of any one of claims 1 to 6.

8. A method for homo- or co-polymerising olefins that comprises the steps of:
a) providing the active supported catalyst system of claim 7;
b) injecting a monomer and optional comonomer(s) in the reacting zone;
c) maintaining under polymerisation conditions;
d) retrieving a polymer.

9. The method of claim 8 wherein the monomer is ethylene or propylene.

10. Use of the active supported catalyst system of claim 7 for maintaining a catalytic life-time larger than 30 minutes.

## Patentansprüche

1. Verfahren zum Herstellen eines aktiven Trägerkatalysatorsystems, das die folgenden Schritte umfasst:
a) Herstellen eines Aktivierungsträgers;
b) Reagieren eines eisenbasierten Nicht-Metallocen-Koordinationskomplexes mit dem Aktivierungsträger;
c) Hinzufügen einer organometallischen Verbindung mit zumindest einer Metall-Kohlenstoff Bindung;
wobei der Aktivierungsträger durch folgende Schritte hergestellt wird:
- Bereitstellen eines Trägers, der aus einem oder mehreren porösen Mineraloxiden hergestellt ist;
- optionales Erhitzen des Trägers unter inertem Gas;
- Funktionalisieren des Trägers mit einer Lösung, die ein Alkylierungsmittel enthält;
- Fluorieren des Trägers mit einer Lösung, die ein Fluorierungsmittel enthält;
- Rückgewinnen des eisenbasierten Nicht-Metallocen-Koordinationskomplexes der Formel I 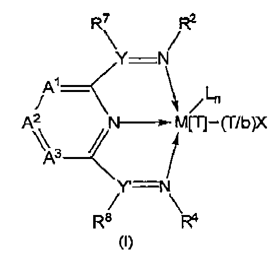 wobei X ein Atom oder eine Gruppe repräsentiert, das bzw. die kovalent oder ionisch an Eisen gebunden ist;
wobei L ein heteroatomhältiger Ligand ist;
wobei n eine ganze Zahl von 1 bis 3 ist;
wobei T der Oxidationsstatus des Übergangsmetalls ist, und b die Valenz des Atoms oder der Gruppe X ist;
wobei R² und R⁴ jeweils unabhängig ausgewählt sind aus Wasserstoff, Halogen, substituiertem oder nicht substituiertem Hydrocarbyl, substituiertem oder nicht substituiertem Heterohydrocarbyl oder SiR'₃, wobei R' unabhängig ausgewählt ist aus Wasserstoff, Halogen, substituiertem oder nicht substituiertem Hydrocarbyl, substituiertem oder nicht substituiertem Heterohydrocarbyl, und jede benachbarten R' miteinander verbunden sein können, um einen Ring zu bilden;
wobei Y und Y' jeweils unabhängig ausgewählt sind aus C oder P(R³);
wobei A¹, A² und A³ jeweils unabhängig N, P oder CR⁹ ist, unter der Maßgabe, dass zumindest eines CR⁹ ist,
wobei R³, R⁷, R⁸ und R⁹ jeweils unabhängig ausgewählt sind aus Wasserstoff, Halogen, substituiertem oder nicht substituiertem Hydrocarbyl, substituiertem oder nicht substituiertem Heterohydrocarbyl oder SiR'₃, wobei R' unabhängig ausgewählt ist aus Wasserstoff, Halogen, substituiertem oder nicht substituiertem Hydrocarbyl, substituiertem oder nicht substituiertem Heterohydrocarbyl,
oder einem Komplex der Formel IIa, IIb oder IIc 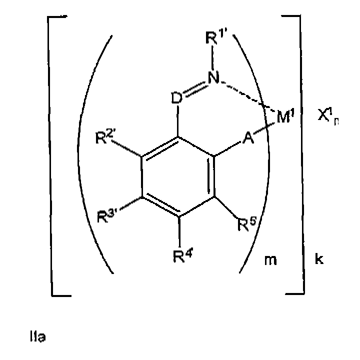 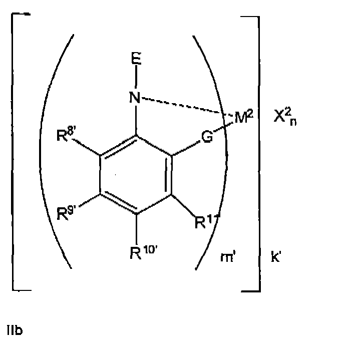 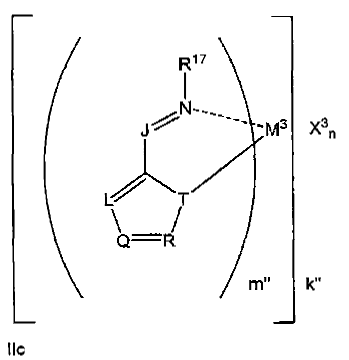 wobei alle Symbole wie in der EP-A-1238989, Seite 4, Zeile 32 bis Seite 9, Zeile 17, beschrieben sind, mit der Einschränkung, dass M Eisen ist,
wobei das aktive Trägerkatalysatorsystem **dadurch gekennzeichnet ist, dass** es kein Aluminoxan als Aktivierungsmittel erfordert.

2. Verfahren nach Anspruch 1, wobei Y und/oder Y' C ist.

3. Verfahren nach Anspru ch 1 oder 2, wobei R² und R⁴ jeweils unabhängig aus substituierten oder nicht substituierten alizyklischen, heterozyklischen oder aromatischen Gruppen ausgewählt sind.

4. Verfahren nach Anspruch 1, wobei die Schritte der Funktionalisierung und Fluorierung in einem Schritt mit einem Agens durchgeführt werden, das zumindest ein Aluminium, ein Fluor und eine organische Gruppe enthält.

5. Verfahren nach Anspruch 4, wobei das Funktionalisierungsmittel Al(R)₂F ist, wobei die R-Gruppen gleich oder unterschiedlich sein können und Alkylgruppen mit 1 bis 20 Kohlenstoffatomen sind.

6. Verfahren nach einem der Ansprüche 1 bis 5, wobei die organometallische Verbindung Aluminiumalkyl ist.

7. Aktives eisenbasiertes Katalysatorsystem, erhältlich mit dem Verfahren nach einem der Ansprüche 1 bis 6.

8. Verfahren zum Homo- oder Copolymerisieren von Olefinen, das die folgenden Schritte umfasst:
a) Bereitstellen des aktiven Trägerkatalysatorsystems nach Anspruch 7;
b) Injizieren eines Monomers und optionalen Comonomers (optionaler Comonomere) in die Reaktionszone;
c) Halten unter Polymerisationsbedingungen;
d) Rückgewinnen eines Polymers.

9. Verfahren nach Anspruch 8, wobei das Monomer Ethylen oder Propylen ist.

10. Verwendung des aktiven Trägerkatalysatorsystems nach Anspruch 7 zum Halten eines katalytischen Lebenszyklus länger als 30 Minuten.

## Revendications

1. Procédé de préparation d'un système de catalyseur supports actif qui comprend les étapes consistant à :
a) préparer un support activateur ;
b) faire réagir un complexe de coordination non-métallocène à base de fer avec le support activateur ;
c) ajouter un composé organométallique comportant au moins une liaison métal-carbone; dans lequel le support activateur est préparé par les étapes consistant à :
- prévoir un support fait d'un ou de plusieurs oxydes minéraux poreux ;
- optionnellement chauffer le support dans une atmosphère de gaz inerte ;
- fonctionnaliser le support avec une solution contenant un agent d'alkylation ;
- réaliser la fluoration du support avec une solution contenant un agent de fluoration ;
- récupérer un support fluoré actif ;
et dans lequel le complexe de coordination non-métallocène à base de fer répond à la formule 1 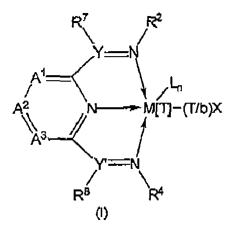 dans laquelle X représente un atome ou un groupe lié de manière covalente ou ionique au fer ;
dans laquelle L représente un ligand contenant un hétéroatome ;
dans laquelle n représente un nombre entier de 1 à 3 ;
dans laquelle T représente l'état d'oxydation du métal de transition et b représente la valence de l'atome ou du groupe X ;
dans laquelle R² et R⁴ sont chacun indépendamment choisis parmi un atome d'hydrogène ou d'halogène, un groupe hydrocarbyle substitué ou non substitué, hétérohydrocarbyle substitué ou non substitué ou SiR'₃ où R' est indépendamment choisi parmi un atome d'hydrogène ou d'halogène, un groupe hydrocarbyle substitué ou non substitué, hétérohydrocarbyle substitué ou non substitué et tous les éventuels R' adjacents peuvent être reliés ensemble pour former un noyau ;
dans laquelle Y et Y' sont chacun indépendamment choisis parmi un atome de C ou un groupe P(R³) ;
dans laquelle A¹, A² et A³ représentent chacun indépendamment un atome de N ou de P ou un groupe CR⁹, à condition qu'au moins l'un d'eux représente un groupe CR⁹ ;
dans laquelle R³, R⁷, R⁸ et R⁹ sont chacun indépendamment choisis parmi un atome d'hydrogène ou d'halogène, un groupe hydrocarbyle substitué ou non substitué, hétérohydrocarbyle substitué ou non substitué ou SiR'₃ où R' est indépendamment choisi parmi un atome d'hydrogène ou d'halogène, un groupe hydrocarbyle substitué ou non substitué, hétérohydrocarbyle substitué ou non substitué,
ou un complexe de formule IIa, IIb ou IIc 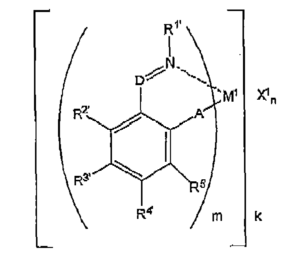 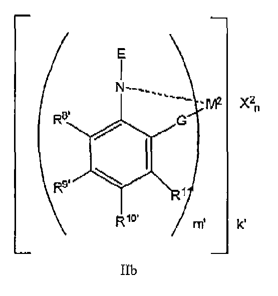 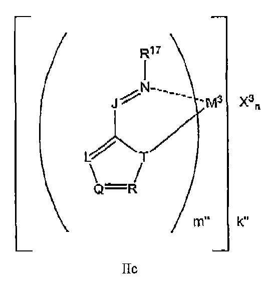 formules dans lesquelles tous les symboles sont tels que décrits dans le document EP-A-1 238 989 entre la page 4, ligne 32 et la page 9, ligne 17, à condition que M représente du fer,
ledit système de catalyseur supporté actif étant **caractérisé en ce qu'**il ne nécessite pas d'aluminoxane en tant qu'agent d'activation.

2. Procédé selon la revendication 1, dans lequel Y et/ou Y' représentent un atome de C.

3. Procédé selon la revendication 1 ou la revendication 2, dans lequel R² et R⁴ sont chacun indépendamment choisis parmi des groupes alicycliques, hétérocycliques ou aromatiques, substitués ou non substitués.

4. Procédé selon la revendication 1, dans lequel les étapes de fonctionnalisation et de fluoration sont réalisées simultanément avec un agent contenant au moins un atome d'aluminium, un atome de fluor et un groupe organique.

5. Procédé selon la revendication 4, dans lequel l'agent de fonctionnalisation est de l'Al(R)₂F, dans lequel les groupes R peuvent être identiques ou différents et représentent des groupes allyles comportant de 1 à 20 atomes de carbone.

6. Procédé selon l'une quelconque des revendications 1 à 5, dans lequel le composé organométallique est un aluminium-alkyle.

7. Système de catalyseur actif à base da fer pouvant être obtenu par le procédé selon l'une quelconque des revendications 1 à 6.

8. Procédé d'homo- ou de co-polymérisation d'oléfines qui comprend les étapes consistant à :
a) prévoir le système de catalyseur supporte actif selon la revendication 7 ;
b) injecter un monomère et éventuellement un (des) comonomère(s) dans la zone de réaction ;
c) maintenir dans des conditions de polymérisation ;
d) récupérer un polymère.

9. Procédé selon la revendication 8, dans lequel le monomère est de l'éthylène ou du propylène.

10. Utilisation du système de catalyseur supporté actif selon la revendication 7 pour maintenir une durée de vie catalytique plus longue que 30 minutes.
